# EUROPEAN PATENT SPECIFICATION

(11) **EP 3 637 927 B1**
(45) Date of publication and mention of the grant of the patent: **01.09.2021**
(21) Application number: 17921157.8
(22) Date of filing: 10.08.2017
(51) Int. Cl.: H04L 1/08, H04W 72/12

(54) **METHOD AND DEVICE FOR CONTROLLING COPY DATA TRANSMISSION FUNCTION IN DUAL CONNECTION**
VERFAHREN UND VORRICHTUNG ZUR STEUERUNG DER KOPIERDATENÜBERTRAGUNGSFUNKTION IN DUALER VERBINDUNG
PROCÉDÉ ET DISPOSITIF DE COMMANDE DE FONCTION DE TRANSMISSION DE DONNÉES DE COPIE EN DOUBLE CONNEXION

(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/096895
(87) International publication number: WO 2019/028764

(56) References cited:
- EP-A1- 3 582 429
- WO-A1-2016/175690
- CN-A- 106 797 648
- SAMSUNG: "Further Discussion on Packet Duplication", 3GPP DRAFT; R2-1707366 FURTHER DISCUSSION ON PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051301854, Retrieved from the Internet: URL:http://www.3gpp.org/ftp/Meetings_3GPP_ SYNC/RAN2/Docs/ [retrieved on 2017-06-26]
- HUAWEI ET AL: "Configuration and control of packet duplication", 3GPP DRAFT; R2-1706716 CONFIGURATION AND CONTROL OF PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Qingdao, China; 20170627 - 20170629 26 June 2017 (2017-06-26), XP051301216, Retrieved from the Internet: URL:http://www.3gpp.org/ftp/Meetings_3GPP_ SYNC/RAN2/Docs/ [retrieved on 2017-06-26]
- ERICSSON: "Duplication in UL in Dual connectivity", 3GPP DRAFT; R2-1702750 - DUPLICATION IN UL IN DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051244738, Retrieved from the Internet: URL:http://www.3gpp.org/ftp/Meetings_3GPP_ SYNC/RAN2/Docs/ [retrieved on 2017-04-03]
- HUAWEI et al.: "Configuration and control of packet duplication", 3GPP TSG RAN WG2 NR Ad Hoc, R2-1706716, 29 June 2017 (2017-06-29), XP051301216,
- ERICSSON: 3GPP TSG-RAN WG2 #97bis, R2-1702750, 7 April 2017 (2017-04-07), XP051244738,
- HUAWEI et al.: "Dynamic activation/deactivation of packet duplication", 3GPP TSG-RAN2 #98, R2-1704835, 19 May 2017 (2017-05-19), XP051275351,

## Description

### TECHNICAL FIELD

The application relates to the field of communication, and more particularly to a data duplication transmission function control method and device for dual connection (DC). Related technologies can be found in SAMSUNG: "Further Discussion on Packet Duplication", 3GPP DRAFT; R2-1707366, HUAWEI ET AL: "Configuration and control of packet duplication", 3GPP DRAFT; R2-1706716, ERICSSON: "Duplication in UL in Dual connectivity", 3GPP DRAFT; R2-1702750 and EP 3582429 A1.

### BACKGROUND

In a DC scenario, multiple network nodes (Cell Groups (CGs)) may serve a terminal device, and data duplication transmission may be performed between the CGs and the terminal device.

In some scenarios, for a specific bearer, a data duplication transmission function between a CG and a terminal device is needed to be activated or deactivated.

Therefore, how to control a data duplication transmission function between a CG and a terminal device is a problem urgent to be solved.

### SUMMARY

The invention is defined in the independent claims.

It is an object of the invention to provide a data duplication transmission function control method and device for DC, which may control a data duplication transmission function between a CG and a terminal device. This object is solved by the subject matter of the independent claims.

A first aspect provides a method for controlling data duplication transmission function for DC, which may include the following operations.

A terminal device receives indication information sent by a network device. The indication information indicates a message in which first information is included and a bit position of the first information in the message. The first information is used to activate or deactivate a data duplication transmission function of at least one bearer of the terminal device respectively.

The terminal device determines a bearer of which the data duplication transmission function is needed to be activated or deactivated according to the indication information and according to a received message used to activate or deactivate the data duplication transmission function of the bearer.

In combination with the first aspect, in a possible implementation mode of the first aspect, the terminal device may include S bearers. And information used to activate or deactivate the data duplication transmission function of the S bearers may include in the same first message. S may be a positive integer.

In combination with the first aspect or any abovementioned possible implementation mode, in another possible implementation mode of the first aspect, the terminal device may include S bearers.

Information used to activate or deactivate the data duplication transmission function of M bearers may include in a second message.

Information used to activate or deactivate the data duplication transmission function of N bearers except the M bearers may include in a third message that is not the second message.

M+N=S, and M and N may be positive integers.

In combination with the first aspect or any abovementioned possible implementation mode, in another possible implementation mode of the first aspect, the second message is of M+N bits. M bits are used to activate or deactivate the data duplication transmission function of the M bearers. And N bits may be invalid bits.

Or, the second message is of M bits and may not include the N invalid bits. The M bits are used to activate or deactivate the data duplication transmission function of the M bearers.

In combination with the first aspect or any abovementioned possible implementation mode, in another possible implementation mode of the first aspect, the third message is of M+N bits. N bits are used to activate or deactivate the data duplication transmission function of the N bearers. And M bits may be invalid bits.

Or, the third message is of N bits and may not include the M invalid bits . The N bits are used to activate or deactivate the data duplication transmission function of the N bearers.

In combination with the first aspect or any abovementioned possible implementation mode, in another possible implementation mode of the first aspect, the terminal device may include S bearers.

N bearers may not have the data duplication transmission function.

Information used to activate or deactivate the data duplication transmission function of M bearers may be mapped into a fourth message.

M+N=S, and S, M and N may be positive integers.

In combination with the first aspect or any abovementioned possible implementation mode, in another possible implementation mode of the first aspect, the fourth message is of M+N bits. M bits are used to activate or deactivate the data duplication transmission function of the M bearers. And N bits are invalid bits.

Or, the fourth message is of M bits. The M bits are used to activate or deactivate the data duplication transmission function of the M bearers. The fourth message may not include the N invalid bits.

In combination with the first aspect or any abovementioned possible implementation mode, in another possible implementation mode of the first aspect, information used to activate or deactivate the data duplication transmission function of bearers of the terminal device may be mapped into a message in which the information is included according to a sequence of identifiers of the activated or deactivated bearers.

In combination with the first aspect or any abovementioned possible implementation mode, in another possible implementation mode of the first aspect, the indication information may indicate a sending party of the message to indicate the message in which the first information is included.

In combination with the first aspect or any abovementioned possible implementation mode, in another possible implementation mode of the first aspect, the information used to activate or deactivate the data duplication transmission function of the S bearers may be mapped into at least one message. Each message of the at least one message is of Q bits. Q may be a positive integer more than or equal to S.

The indication information may indicate an arrangement position of the first information in the Q bits to indicate the message in which the first information is included and/or the bit position of the first information in the message.

In combination with the first aspect or any abovementioned possible implementation mode, in another possible implementation mode of the first aspect, the indication information may be carried in a Radio Resource Control (RRC) message configured for the at least one bearer.

In combination with the first aspect or any abovementioned possible implementation mode, in another possible implementation mode of the first aspect, the indication information may be sent by a master network node or secondary network node of the terminal device.

In combination with the first aspect or any abovementioned possible implementation mode, the message in which the at least one piece of first information is included is a Media Access Control (MAC) Control Element (CE).

A second aspect provides a method for controlling data duplication transmission function for DC, which may include the following operations.

A message in which first information is included and a bit position of the first information in the message are/is determined. The first information is used to activate or deactivate a data duplication transmission function of at least one bearer of a terminal device respectively.

Indication information is sent to the terminal device, the indication information are used to indicate the message in which the first information is included and/or the bit position of the first information in the message.

In combination with the second aspect, in a possible implementation mode of the second aspect, the terminal device may include M first bearers and N second bearers. And the at least one bearer may be at least part of bearers of the terminal device.

The first bearer may be a bearer between the terminal device and a first network node. And the second bearer may be a bearer between the terminal device and a second network node. M and N may be positive integers.

In combination with the second aspect or any abovementioned possible implementation mode, in another possible implementation mode of the second aspect, information configured to activate or deactivate the data duplication transmission function of the M first bearers and information used to activate or deactivate the data duplication transmission function of the N second bearers may include in the same first message.

In combination with the second aspect or any abovementioned possible implementation mode, in another possible implementation mode of the second aspect, the first message is of N+N bits. M bits may be used to activate or deactivate the data duplication transmission function of the M first bearers. N bits may be used to activate or deactivate the data duplication transmission function of the N second bearers.

In combination with the second aspect or any abovementioned possible implementation mode, in another possible implementation mode of the second aspect, the first message may be sent by a master network node in the first network device and the second network node.

Or, the first message may be sent by a secondary network node in the first network node and the second network node.

In combination with the second aspect or any abovementioned possible implementation mode, in another possible implementation mode of the second aspect, the information configured to activate or deactivate the data duplication transmission function of the M first bearers may include in a second message.

The information configured to activate or deactivate the data duplication transmission function of the N second bearers may include in a third message that is not the second message.

In combination with the second aspect or any abovementioned possible implementation mode, in another possible implementation mode of the second aspect, the second message is of M+N bits. M bits being may be used to activate or deactivate the data duplication transmission function of the M first bearers. And N bits may be invalid bits.

Or, the second message is of M bits. The M bits may be used to activate or deactivate the data duplication transmission function of the M first bearers.

In combination with the second aspect or any abovementioned possible implementation mode, in another possible implementation mode of the second aspect, the third message is of M+N bits. N bits may be used to activate or deactivate the data duplication transmission function of the N second bearers. And M bits may be invalid bits.

Or, the third message is of N bits and may not include the invalid bits corresponding to the first bearers, . The N bits may be used to activate or deactivate the data duplication transmission function of the N second bearers.

In combination with the second aspect or any abovementioned possible implementation mode, in another possible implementation mode of the second aspect, the second message may be sent by the first network node. The third message may be sent by the second network node.

In combination with the second aspect or any abovementioned possible implementation mode, in another possible implementation mode of the second aspect, the N second bearers may not have the data duplication transmission function.

The information configured to activate or deactivate the data duplication transmission function of the M first bearers may be mapped into a fourth message.

In combination with the second aspect or any abovementioned possible implementation mode, in another possible implementation mode of the second aspect, the fourth message is of M+N bits. M bits may be used to activate or deactivate the data duplication transmission function of the M first bearers. And N bits may be invalid bits.

Or, the fourth message is of M bits, the M bits may be used to activate or deactivate the data duplication transmission function of the M first bearers. And the fourth message may not include the N invalid bits.

In combination with the second aspect or any abovementioned possible implementation mode, in another possible implementation mode of the second aspect, the first network node may be a network node in a New Radio (NR) system. The second network node may be a network node in a Long Term Evolution (LTE) system.

In combination with the second aspect or any abovementioned possible implementation mode, in another possible implementation mode of the second aspect, information used to activate or deactivate the data duplication transmission function of bearers of the terminal device may be mapped into a message in which the information is included according to a sequence of identifiers of the activated or deactivated bearers.

In combination with the second aspect or any abovementioned possible implementation mode, in another possible implementation mode of the second aspect, the indication information may indicate a sending party of the message to indicate the message in which the first information is included.

In combination with the second aspect or any abovementioned possible implementation mode, in another possible implementation mode of the second aspect, the information configured to activate or deactivate the data duplication transmission function of the M first bearers. And the N second bearers may be mapped into at least one message. Each message of the at least one message is of Q bits. Q may be a positive integer more than or equal to M+N.

The indication information may indicate an arrangement position of the first information in the Q bits to indicate the message in which the first information is included and/or the bit position of the first information in the message.

In combination with the second aspect or any abovementioned possible implementation mode, in another possible implementation mode of the second aspect, the method may be executed by one network node of the first network node and the second network node. The method may further include the following operation.

The network node performs negotiation with the other network node in the first network node and the second network node about the message in which the at least one piece of first information is included and/or the bit position of the first information in the message.

In combination with the second aspect or any abovementioned possible implementation mode, in another possible implementation mode of the second aspect, the indication information may be carried in an RRC message configured for the at least one bearer.

In combination with the second aspect or any abovementioned possible implementation mode, in another possible implementation mode of the second aspect, the indication information may be sent by the master network node or secondary network node of the terminal device.

In combination with the second aspect or any abovementioned possible implementation mode, the message in which the at least one piece of first information is included is a MAC CE.

A third aspect provides a terminal device, which is configured to execute the method in the first aspect or any possible implementation mode of the first aspect. Specifically, the terminal device includes functional modules configured to execute the method in the first aspect or any possible implementation mode of the first aspect. An example provides a terminal device, which includes a processor, a memory and a transceiver. The processor, the memory and the transceiver communicate with one another through an internal connecting path to transmit control and/or data signals to enable the terminal device to execute the method in the first aspect or any possible implementation mode of the first aspect. Another example provides a device for controlling data duplication transmission function for DC, which is configured to execute the method in the second aspect or any possible implementation mode of the second aspect. Specifically, the control device includes functional modules configured to execute the method in the second aspect or any possible implementation mode of the second aspect.

Another example provides a device for controlling data duplication transmission function for DC, which includes a processor, a memory and a transceiver. The processor, the memory and the transceiver communicate with one another through an internal connecting path to transmit control and/or data signals to enable the network device to execute the method in the second aspect or any possible implementation mode of the second aspect.

Another example provides a computer-readable medium, which is configured to store a computer program, the computer program including an instruction configured to execute the method in each aspect or any possible implementation mode.

Accordingly, in the examples of the application, the network device, when performing configuration for a bearer of the terminal device, for example, performing configuration by RRC, may configure a message in which information used to activate or deactivate the data duplication transmission function of the bearer is included and/or a bit position of the information in the message. Therefore, after receiving the message in which the information is included, the terminal device may determine whether the data duplication transmission function of the bearer is activated or deactivated.

### BRIEF DESCRIPTION OF DRAWINGS

In order to describe the technical solutions of the examples of the application more clearly, the drawings required to be used in descriptions about the examples or a conventional art will be simply introduced below. It is apparent that the drawings described below are only some examples of the application. Other drawings may further be obtained by those of ordinary skill in the art according to these drawings without creative work.
FIG. 1 is a schematic diagram of a protocol architecture for data duplication under DC according to an example of the application.
FIG. 2 is a schematic diagram of a protocol architecture for data duplication under DC according to an example of the application.
FIG. 3 is a schematic flowchart of a data duplication transmission function control method for DC according to an example of the application.
FIG. 4 is a schematic block diagram of a terminal device according to an example of the application.
FIG. 5 is a schematic block diagram of a data duplication transmission function control device for DC according to an example of the application.
FIG. 6 is a schematic block diagram of a system chip according to an example of the application.
FIG. 7 is a schematic block diagram of a communication device according to an example of the application.

### DETAILED DESCRIPTION

The technical solutions in the examples of the disclosure will be described below in combination with the drawings in the examples of the application. It is apparent that the described examples are not all examples but part of examples of the disclosure. All other examples obtained by those of ordinary skill in the art based on the examples in the disclosure without creative work shall fall within the scope of protection of the disclosure.

The technical solutions of the examples of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system or a future 5th-Generation (5G) system (which may also be called an NR system).

Optionally, a network device or network node mentioned in the examples of the application may provide communication coverage for a specific geographical region and may communicate with a terminal device (for example, User Equipment (UE)) in the coverage. Optionally, the network device may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a relay station, an access point, a vehicle-mounted device, a wearable device, a network-side device in a future 5G network, a network device in a future evolved Public Land Mobile Network (PLMN) or the like.

Optionally, the terminal device mentioned in the examples of the application may be mobile or fixed. Optionally, the terminal device may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in the future 5G network, a terminal device in the future evolved PLMN or the like.

In a Dual Connection (DC) scenario, multiple network nodes (Cell Group (CG)) may serve a terminal device, and data duplication transmission may be performed between the CGs and the terminal device.

It is to be understood that, in the examples of the application, a CG may be equal to a network node or a network device, etc.

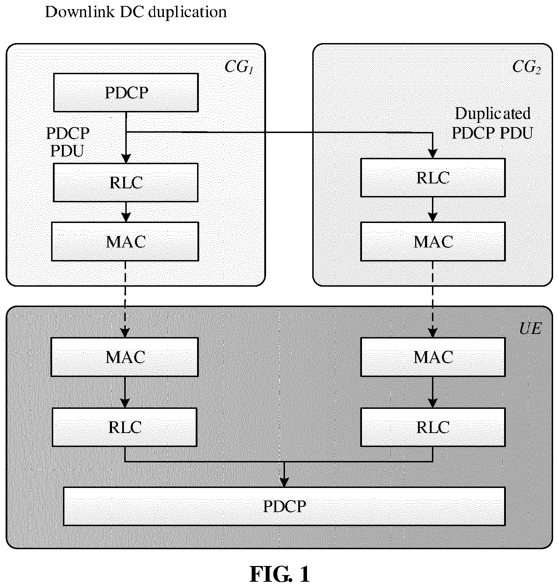

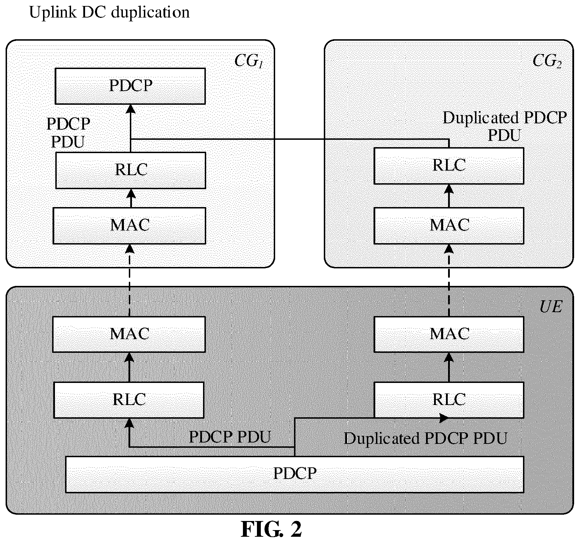

Optionally, in the DC scenario, a protocol architecture for a data duplication transmission manner may be shown in FIG. 1 and FIG. 2. A split bearer protocol architecture is adopted for the data duplication transmission manner. For uplink and downlink, a Packet Data Convergence Protocol (PDCP) is located in a certain CG (Master CG (MCG) or a Secondary CG (SCG)), and the CG is an anchor CG. The PDCP duplicates a PDCP Protocol Data Unit (PDU) to obtain two PDCP PDUs, for example, one being the PDCP PDU and the other being a duplicated PDCP PDU. The two PDCP PDUs pass through Radio Link Control (RLC) layers and MAC layers of different CGs, then arrive at corresponding MAC and RLC layers of a terminal (downlink) or a base station (uplink) through an air interface and are finally converged in the PDCP. The PDCP layer, when monitoring that the two PDCP PDUs are duplications that are the same, discards one of them and transmits the other to a high layer.

A bearer connected with RLC and MAC respectively under the PDCP is called a split bearer. If the PDCP is located in the MCG, it is an MCG split bearer. If the PDCP is located in the SCG, it is an SCG split bearer.

For bearers (which may also be called radio bearers) configured with a data duplication transmission function, the data duplication transmission function of a certain bearer may be dynamically activated or deactivated through a MAC CE. For a DC condition, the MCG and the SCG may send MAC CEs to activate or deactivate the data duplication transmission function of a certain split bearer of a terminal respectively, or only the MCG or the SCG sends the MAC CE.

However, in the DC scenario, the MCG and the SCG may send the MAC CEs respectively or only the MCG or the SCG sends the MAC CE, and in such case, the terminal needs to understand a corresponding relationship between a bit in the received MAC CE and a split bearer of the terminal device.

Therefore, the examples of the application provide the following solutions to solve the problem to implement data duplication transmission function control for DC.

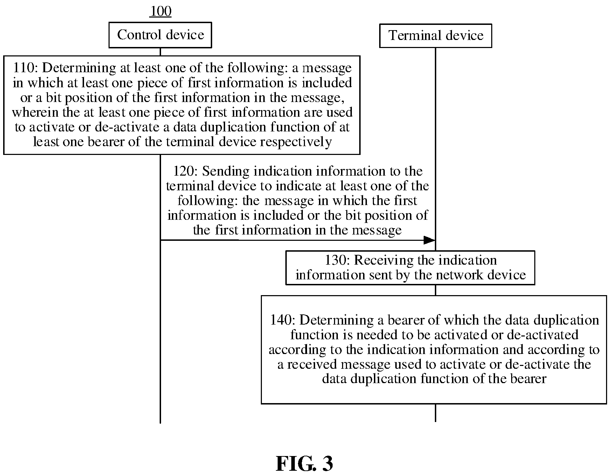

FIG. 3 is a schematic flowchart of a data duplication transmission function control method 100 for DC according to an example of the application. The method 100 includes at least part of the following contents.

At 110, a control device determines a message in which first information is included and a bit position of the first information in the message. The first information is used to activate or deactivate a data duplication transmission function of at least one bearer of a terminal device respectively.

Optionally, the control device is an MCG or an SCG. The message in which the first information is included is a MAC CE.

At 120, the control device sends indication information to the terminal device. The indication information is used to indicate the message in which the first information is included and/or the bit position of the first information in the message.

Optionally, the indication information is carried in an RRC message for configuration for the at least one bearer.

Optionally, the indication information is sent by a master network node (MCG) or secondary network node (SCG) of the terminal device.

At 130, the terminal device receives the indication information sent by the control device. The indication information is used to indicate the message in which the information is included and the bit position of the first information in the message. The first information is used to activate or deactivate the data duplication transmission function of the at least one bearer of the terminal device respectively.

At 140, the terminal device determines a bearer of which the data duplication transmission function is needed to be activated or deactivated according to the indication information and according to a received message configured to activate or deactivate the data duplication transmission function of the bearer.

Specifically, the network device, when performing configuration for a bearer of the terminal device, for example, performing configuration by RRC, may configure a message in which information used to activate or deactivate the data duplication transmission function of the bearer is included and/or a bit position of the information in the message. Therefore, after receiving the message in which the information is included, the terminal device may determine whether the data duplication transmission function of the bearer is activated or deactivated.

Optionally, in the example of the application, the network device may configure information about activation or de-activation of the data duplication transmission function for each bearer.

Or, the network device may also configure information about activation or de-activation of the data duplication transmission function for multiple bearers in a unified manner. For example, the network device may respectively configure the specific bearer, which each bit in a message sent by the MCG is used to activate or deactivate, of the terminal device.

Optionally, in the example of the application, the terminal device may include S bearers. S may be a positive integer.

Optionally, in the example of the application, information used to activate or deactivate the data duplication transmission function of bearers of the terminal device may be mapped into a message in which the information is included according to a sequence of identifiers of the activated or deactivated bearers.

Optionally, the indication information indicates a sending party of the message to indicate the message in which the first information is included.

Optionally, the information configured to activate or deactivate the data duplication transmission function of the S bearers is mapped into at least one message. Each message of the at least one message includes Q bits. Q may be a positive integer more than or equal to S. The indication information indicates an arrangement position of the first information in the Q bits to indicate the message in which the first information is included and/or the bit position of the first information in the message.

Optionally, all the S bearers may have the data duplication transmission function in DC.

The S bearers may include M first bearers and N second bearers. The M first bearers may be bearers between the terminal device and the MCG, and the N second bearers may be bearers between the terminal device and the SCG.

For the terminal device, the terminal device may not know about a difference between the first bearer and the second bearer, namely the terminal device does not know about the specific CG, the bearer between which and the terminal device is the bearer of the terminal device .

Optionally, in the example of the application, the network device may configure the information corresponding to the S bearers of the terminal device and used to activate or deactivate the data duplication transmission function in multiple manners.

In an implementation mode, the information configured to activate or deactivate the data duplication transmission function of the S bearers is included in the same first message.

Specifically, the information used to activate or deactivate the data duplication transmission function of the M first bearers and the N second bearers may be configured by the control device to belong to the same MAC CE. The network device may configure the S bearers respectively or in the unified manner. The network device may configure a sending party of a MAC CE used to activate or deactivate each bearer. After receiving the indication information for configuration, the terminal device may learn about the specific CG sending the MAC CE that the information used to activate or deactivate the data duplication transmission function of each bearer belongs to.

Optionally, the first message may be sent by the MCG and may also be sent by the SCG.

Optionally, the information used to activate or deactivate the data duplication transmission function of the bearers of the terminal device is mapped into the message in which the information is included in according to the sequence of the identifiers of the activated or deactivated bearers.

Specifically, the control device indicates a position of the information in the MAC CE that the information belongs to. The information is used to activate or deactivate the data duplication transmission function of a certain bearer of the terminal device. The terminal device may obtain the specific position of the information used to activate or deactivate the data duplication transmission function of the bearer in the MAC CE according to the identifier of the bearer.

For example, the terminal device may include eight bearers with identifiers 0-7.The MAC CE includes eight bits. Then, information corresponding to the bearer with the identifier 0 and used to activate or deactivate the data duplication transmission function is mapped to a first bit of the MAC CE. Information corresponding to the bearer with the identifier 1 and used to activate or deactivate the data duplication transmission function is mapped to a second bit of the MAC CE, and so on.

Optionally, the information used to activate or deactivate the data duplication transmission function of the S bearers is mapped into the at least one message. Each message of the at least one message includes the Q bits, Q being a positive integer more than or equal to S. The indication information indicates the arrangement position of the first information in the Q bits to indicate the message in which the first information is included and/or the bit position of the first information in the message.

Specifically, the control device indicates a position of the information used to activate or deactivate the data duplication transmission function of a certain bearer of the terminal device in the MAC CE that the information belongs to. The terminal device may obtain the specific position of the information used to activate or deactivate the data duplication transmission function of the bearer in the MAC CE according to such an indication.

For example, the terminal device may include eight bearers with identifiers 0-7 and the MAC CE includes eight bits. Then, the network device may indicate that information corresponding to the bearer with the identifier 0 and used to activate or deactivate the data duplication transmission function is mapped to a first bit of the MAC CE. Information corresponding to the bearer with the identifier 1 and used to activate or deactivate the data duplication transmission function is mapped to a third bit of the MAC CE.

In another implementation mode, the information used to activate or deactivate the data duplication transmission function of the M first bearers is included in a second message. The information used to activate or deactivate the data duplication transmission function of the N second bearers except the M bearers is included in a third message that is not the second message.

Optionally, the second message may be sent by the MCG, and the third message may be sent by the SCG.

That is, the control device may configure the information corresponding to the bearers between the terminal device and the MCG and used to activate or deactivate the data duplication transmission function to be sent by the MCG, and configure the information corresponding to the bearers between the terminal device and the SCG and used to activate or deactivate the data duplication transmission function to be sent by the SCG.

That is, only the data duplication transmission function of an MCG split bearer may be controlled to be turned on or turned off through a MAC CE sent by the MCG. And only the data duplication transmission function of an SCG split bearer may be controlled to be turned on or turned off through a MAC CE sent by the SCG.

However, it is to be understood that, when the control device configures each bearer, the terminal device does not know about the specific CG, the bearer between which and the terminal device is the each bearer.

Optionally, the second message and the third message may be in the same format. For example, each of the second message and the third message includes M+N bits.

In the second message, M bits may be used to activate or deactivate the data duplication transmission function of the M first bearers, and N bits may be invalid bits. It is to be understood that the invalid bits in the example of the disclosure refer to that these bits are not used to activate or deactivate the data duplication transmission function of the bearers. These bits may contain no valid information or contain other information.

In the second message, the M bits may be at first M positions in S bits, and the N bits may be at last N positions in the S bits. Or, the M bits may be at the last M positions in the S bits, and the N bits may be at the first N positions in the S bits. Or, the M bits and the N bits may be alternately arranged.

In the third message, N bits may be used to activate or deactivate the data duplication transmission function of the N second bearers, and M bits may be invalid bits.

In the third message, the M bits may be at first M positions in S bits, and the N bits may be at last N positions in the S bits. Or, the M bits may be at the last M positions in the S bits, and the N bits may be at the first N positions in the S bits. Or, the M bits and the N bits may be alternately arranged.

Optionally, the indication information may indicate the message in which the information corresponding to the bearer and configured to activate or deactivate the data duplication transmission function is included. For example, if a value of the indication information is 1, it is indicated that the corresponding message is sent by the MCG, namely the data duplication transmission function of the bearer is controlled by the MAC CE sent by the MCG. And if the value of the indication information is 0, it is indicated that the corresponding message is sent by the SCG, namely the data duplication transmission function of the bearer is controlled by the SCG.

Optionally, the information used to activate or deactivate the data duplication transmission function of the bearers of the terminal device may be mapped into the message in which the information is included according to the sequence of the identifiers of the activated or deactivated bearers.

Specifically, the control device may not indicate a position of the information used to activate or deactivate the data duplication transmission function of a certain bearer of the terminal device in the MAC CE that the information belongs to. The terminal device may obtain the specific position of the information configured to activate or deactivate the data duplication transmission function of the bearer in the MAC CE according to the identifier of the bearer.

For example, a format of the MAC CE is a bitmap with a bitmap length of 8.

There is made such a hypothesis that the terminal device supports eight split bearers, five are MCG split bearers (namely the PDCP is located in the MCG and identifiers are 0-4 respectively) and three are SCG split bearers (namely the PDCP is located in the SCG and identifiers are 5-7 respectively). It is configured that the first five bits in an 8bit bitmap sent by the MCG correspond to the MCG split bearers of the terminal and the last three bits are invalid bits. It is configured that the first three bits in an 8bit bitmap sent by the SCG correspond to the SCG split bearers of the terminal and last five bits are invalid bits.

Optionally, the information used to activate or deactivate the data duplication transmission function of the S bearers is mapped into multiple messages. Each message of the at least one message includes Q bits, Q being a positive integer more than or equal to S. The indication information indicates the arrangement position of the first information in the Q bits to indicate the message in which the first information is included and/or the bit position of the first information in the message.

Specifically, the control device indicates a position of the information configured to activate or deactivate the data duplication transmission function of a certain bearer of the terminal device in the MAC CE that the information belongs to. The terminal device may obtain the specific position of the information configured to activate or deactivate the data duplication transmission function of the bearer in the MAC CE according to such an indication.

For example, the terminal device may include eight bearers with identifiers 0-7. A MAC CE includes eight bits, and two MAC CEs include 16 bits. Then, for a certain bearer, four bits (each bit has two numerical values 0 and 1) are needed to indicate information corresponding to the bearer and configured to activate or deactivate the data duplication transmission function.

Optionally, formats of the second message and the third message may not necessary be the same. For example, the second message includes the M bits, and the third message includes the N bits. In such case, the second message and the third message do not include the N invalid bits and the M invalid bits respectively.

In the second message, the M bits are configured to activate or deactivate the data duplication transmission function of the M first bearers. In the third message, the N bits are configured to activate or deactivate the data duplication transmission function of the N second bearers.

For example, if the MAC CEs may be in different formats, namely the format of the MAC CE sent by the MCG may be inconsistent with the format of the MAC CE sent by the SCG, the bitmap of the MCG is configured to have a length of five bits corresponding to the MCG split bearers one to one. The bitmap of the SCG is configured to have a length of three bits corresponding to the SCG split bearers one to one.

Optionally, in the example of the application, the terminal device may include S bearers.

The S bearers may include M first bearers and N second bearers. In the S bearers, the M first bearers have the data duplication transmission function in DC, and the N second bearers do not have the data duplication transmission function in DC.

Optionally, the M first bearers may be bearers between the terminal device and the MCG, and the N second bearers may be bearers between the terminal device and the SCG. Or, the M first bearers may be bearers between the terminal device and the SCG, or, the N second bearers may be bearers between the terminal device and the MCG.

For the terminal device, the terminal device may not know about a difference between the first bearer and the second bearer, namely the terminal device does not know about the specific CG, the bearer between which and the terminal device is the bearer of the terminal device.

Optionally, the M first bearers and the N second bearers may be bearers in different communication systems. For example, the M first bearers may be bearers in an NR system, and the N second bearers may be bearers in an LTE system.

Optionally, information configured to activate or deactivate the data duplication transmission function of the M bearers is mapped into a fourth message.

In a mode, the fourth message includes M+N bits. M bits are used to activate or deactivate the data duplication transmission function of the M bearers and N bits are invalid bits.

In another mode, the fourth message includes the M bits. The M bits are used to activate or deactivate the data duplication transmission function of the M bearers, and the fourth message does not include the N invalid bits.

For an Evolved Universal Terrestrial Radio Access (E-UTRA) NR DC (EN-DC) (the MCG is a device in the LTE system and the SCG is a device in the NR system) or NR eNB DC (NE-DC) (the MCG is a device in the NR system and the SCG is a device in the LTE system) condition, namely a CG is an LTE base station and a CG is an NR base station, since LTE does not support sending of a data duplication activation/de-activation MCE CE and LTE PDCP also does not support the data duplication transmission function, only a correspondence between a bit in a MAC CE sent by the NR CG and a split bearer of the terminal is needed to be configured, for example, as follows.

Under EN-DC, LTE is the MCG and NR is the SCG. If a bitmap of a MAC CE includes eight bits and the terminal device has five MCG split bearers (the PDCP is located on an LTE side) and three SCG split bearers (the PDCP is located on an NR side), the control device may configure that the first three bits of the MAC CE sent by NR correspond to the SCG split bearers one to one and last five bits are invalid bits.

Or, it is configured that the MAC CE sent by NR is a bitmap with a length of 3 corresponding to the SCG split bearers one to one.

Accordingly, in the example of the application, the network device, when performing configuration for a bearer of the terminal device, for example, performing configuration by RRC, may configure a message in which information used to activate or deactivate the data duplication transmission function of the bearer is included and/or a bit position of the information in the message. Therefore, after receiving the message in which the information is included, the terminal device may determine whether the data duplication transmission function of the bearer is activated or deactivated or not.

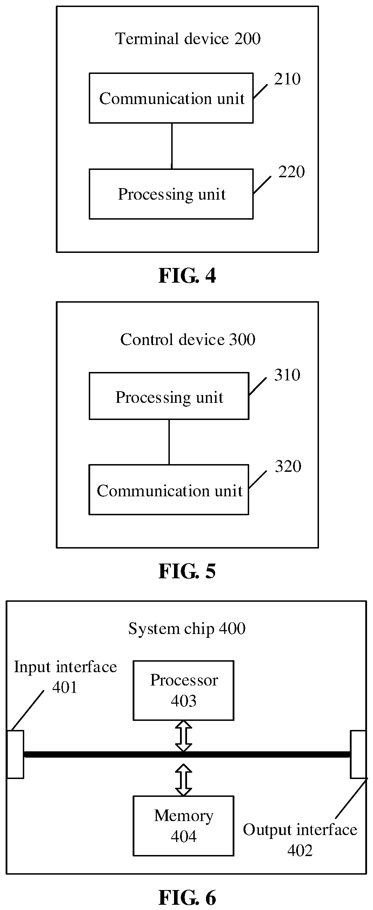

FIG. 4 is a schematic block diagram of a terminal device 200 according to an example of the application. As shown in FIG. 4, the terminal device 200 includes a communication unit 210 and a processing unit 220.

The communication unit 210 is configured to receive indication information sent by a network device. The indication information is used to indicate a message in which first information is included and a bit position of the first information in the message and the first information being configured to activate or deactivate a data duplication transmission function of at least one bearer of the terminal device in DC respectively. The processing unit 220 is configured to determine a bearer of which the data duplication transmission function is needed to be activated or deactivated according to the indication information and according to a received message configured to activate or deactivate the data duplication transmission function of the bearer.

It is to be understood that the terminal device 200 may correspond to the terminal device in the method 100, may implement operations implemented by the terminal device in the method 100 and, for simplicity, will not be elaborated herein.

FIG. 5 is a schematic block diagram of a data duplication transmission function control device 300 for DC according to an example of the application. As shown in FIG. 5, the control device 300 includes a processing unit 310 and a communication unit 320. The processing unit 310 is configured to determine a message in which first information is included and a bit position of the first information in the message. The first information is used to activate or deactivate a data duplication transmission function of at least one bearer of a terminal device respectively. The communication unit 320 is configured to send indication information to the terminal device, the indication information is used to indicate the message in which the first information is included and/or the bit position of the first information in the message.

It is to be understood that the control device 300 may correspond to the control device in the method 100, may implement operations implemented by the control device in the method 100 and, for simplicity, will not be elaborated herein.

FIG. 6 is a schematic structure diagram of a system chip 400 according to an example of the application. The system chip 400 of FIG. 6 includes an input interface 401, output interface 402, processor 403 and memory 404 which may be connected through an internal communication connecting line. The processor 403 is configured to execute a code in the memory 404.

Optionally, when the code is executed, the processor 403 implements corresponding operations executed by the terminal device or the control device in the method 100. For simplicity, no more elaborations will be made herein.

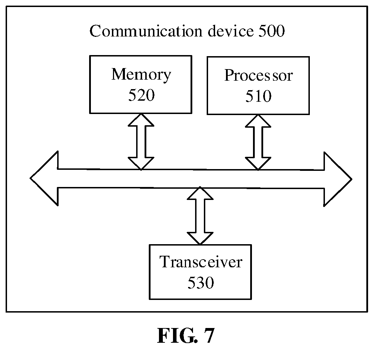

FIG. 7 is a schematic block diagram of a communication device 500 according to an example of the application. As shown in FIG. 7, the communication device 500 includes a processor 510 and a memory 520. Herein, the memory 520 may store a program code, and the processor 510 may execute the program code stored in the memory 520.

Optionally, as shown in FIG. 7, the communication device 500 may include a transceiver 530, and the processor 510 may control the transceiver 530 for external communication.

Optionally, the processor 510 may call the program code stored in the memory 520 to execute corresponding operations executed by the terminal device or the control device in the method 100. For similarity, no more elaborations will be made herein.

It is to be understood that the processor in the example of the application may be an integrated circuit chip and has a signal processing capability. In an implementation process, each step of the method example may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the examples of the application may be implemented or executed. The universal processor may be a microprocessor or the processor may also be any conventional processor and the like. The steps of the method disclosed in combination with the examples of the application may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps of the methods in combination with hardware.

It can be understood that the memory in the example of the application may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

Those of ordinary skill in the art may realize that the units and algorithm steps of each example described in combination with the examples disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the application.

Those skilled in the art may clearly learn about that specific working processes of the system, device and unit described above may refer to the corresponding processes in the method example and will not be elaborated herein for convenient and brief description.

In some examples provided by the disclosure, it is to be understood that the disclosed system, device and method may be implemented in another manner. For example, the device example described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the examples according to a practical requirement.

In addition, each functional unit in each example of the application may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each example of the application.

The above is only the specific implementation mode of the application and not intended to limit the scope of protection of the application. Any variations or replacements apparent to those skilled in the art are included according to the scope of protection of the claims.

## Claims

1. A method for controlling data duplication transmission function for Dual Connection DC, comprising:
receiving, by a terminal device, indication information sent by a control device, wherein the indication information indicates: a message in which at least one piece of first information is included and a bit position of the first information in the message, wherein the at least one piece of first information is used to activate or deactivate a data duplication transmission function of at least one bearer of the terminal device respectively (130), wherein the message in which the at least one piece of first information is included is a Media Access Control, MAC, Control Element, CE; and
determining, by the terminal device, a bearer of which the data duplication transmission function is needed to be activated or deactivated according to the indication information and according to a received message used to activate or deactivate the data duplication transmission function of the bearer (140).

2. The method of claim 1, wherein the terminal device comprises S bearers, and information used to activate or deactivate the data duplication transmission function of the S bearers are included in a same first message, and S is a positive integer.

3. The method of claim 1, wherein the terminal device comprises S bearers;
information used to activate or deactivate the data duplication transmission function of M bearers is included in a second message; and
information used to activate or deactivate the data duplication transmission function of N bearers except the M bearers is included in a third message that is not the second message,
wherein M+N=S and the M and N are positive integers.

4. The method of claim 3, wherein
the second message is of M+N bits, and the M bits are used to activate or deactivate the data duplication transmission function of the M bearers, and the N bits are invalid bits; or
the second message is of M bits and does not comprise the N invalid bits, and the M bits are used to activate or deactivate the data duplication transmission function of the M bearers.

5. The method of claim 3 or 4, wherein
the third message is of M+N bits, and the N bits are used to activate or deactivate the data duplication transmission function of the N bearers, and the M bits are invalid bits; or,
the third message is of N bits and does not comprise the M invalid bits, and the N bits are used to activate or deactivate the data duplication transmission function of the N bearers.

6. The method of claim 1, wherein the terminal device comprises S bearers;
N bearers do not have the data duplication transmission function; and
information used to activate or deactivate the data duplication transmission function of M bearers is mapped into a fourth message,
wherein, M+N=S and the S, M and N are positive integers.

7. The method of claim 6, wherein
the fourth message is of M+N bits, and the M bits are used to activate or deactivate the data duplication transmission function of the M bearers, and the N bits are invalid bits;
or, the fourth message is of M bits, and the M bits are used to activate or deactivate the data duplication transmission function of the M bearers, and the fourth message does not comprise the N invalid bits.

8. The method of any one of claims 2-7, wherein information used to activate or deactivate the data duplication transmission function of bearers of the terminal device is mapped into a message in which the information is included according to a sequence of identifiers of the activated or deactivated bearers.

9. The method of claim 8, wherein the indication information indicates a sending party of the message to indicate the message in which the first information is included.

10. The method of any one of claims 2-9, wherein the information used to activate or deactivate the data duplication transmission function of the S bearers is mapped into at least one message, and each message of the at least one message is of Q bits, and Q is a positive integer more than or equal to S; and
the indication information indicates an arrangement position of the first information in the Q bits to indicate at least one of the following: the message in which the first information is included or the bit position of the first information in the message.

11. The method of any one of claims 1-10, wherein the indication information is carried in a Radio Resource Control, RRC, message for configuration for the at least one bearer.

12. The method of any one of claims 1-11, wherein the indication information is sent by a master network node or secondary network node of the terminal device.

13. A method for controlling data duplication transmission function for Dual Connection, DC, comprising:
determining a message in which at least one piece of first information is included and a bit position of the first information in the message, wherein the at least one piece of first information is used to activate or deactivate a data duplication transmission function of at least one bearer of a terminal device respectively (110), wherein the message in which the at least one piece of first information is included is a Media Access Control, MAC, Control Element, CE; and
sending indication information to the terminal device, wherein the indication information indicates the message in which the first information is included and the bit position of the first information in the message (120).

14. A terminal device (200), comprising a communication unit and a processing unit, wherein
the communication unit (210) is configured to receive indication information sent by a network device, the indication information indicates: a message in which at least one piece of first information is included and a bit position of the first information in the message, wherein the at least one piece of first information is used to activate or deactivate a data duplication transmission function of at least one bearer of the terminal device in Dual Connection (DC) respectively, wherein the message in which the at least one piece of first information is included is a Media Access Control, MAC, Control Element, CE; and
the processing unit (220) is configured to determine a bearer of which the data duplication transmission function is needed to be activated or deactivated according to the indication information and according to a received message used to activate or deactivate the data duplication transmission function of the bearer.

## Patentansprüche

1. Verfahren zur Steuerung der Datenvervielfältigungsübertragungsfunktion für Dualverbindung, DC, umfassend:
Empfangen von Angabeinformationen, die von einer Steuervorrichtung gesendet werden, durch eine Endgerätevorrichtung, wobei die Angabeinformationen angeben: eine Nachricht, in der mindestens eine erste Information beinhaltet ist, und eine Bitposition der ersten Information in der Nachricht, wobei die mindestens eine erste Information verwendet wird, um eine Datenvervielfältigungsübertragungsfunktion von mindestens einem Träger der Endgerätevorrichtung zu aktivieren bzw. zu deaktivieren (130), wobei die Nachricht, in der die mindestens eine erste Information beinhaltet ist, ein Medienzugriffssteuerungs-, MAC-, Steuerelement, CE ist; und
Bestimmen, durch die Endgerätevorrichtung, eines Trägers, von dem die Datenvervielfältigungsübertragungsfunktion aktiviert oder deaktiviert werden muss, gemäß den Angabeinformationen und gemäß einer empfangenen Nachricht, die verwendet wird, um die Datenvervielfältigungsübertragungsfunktion des Trägers (140) zu aktivieren oder zu deaktivieren.

2. Verfahren nach Anspruch 1, wobei die Endgerätevorrichtung S Träger umfasst und Informationen, die zum Aktivieren oder Deaktivieren der Datenvervielfältigungsübertragungsfunktion der S Träger verwendet werden, in derselben ersten Nachricht enthalten sind, und S eine positive ganze Zahl ist.

3. Verfahren nach Anspruch 1, wobei die Endgerätevorrichtung S Träger umfasst;
Informationen, die zum Aktivieren oder Deaktivieren der Datenvervielfältigungsübertragungsfunktion von M Trägern verwendet werden, in einer zweiten Nachricht beinhalten; und
Informationen, die zum Aktivieren oder Deaktivieren der Datenvervielfältigungsübertragungsfunktion von N Trägern außer den M Trägern verwendet werden, in einer dritten Nachricht enthalten sind, die nicht die zweite Nachricht ist,
wobei M+N=S und M und N positive ganze Zahlen sind.

4. Verfahren nach Anspruch 3, wobei
die zweite Nachricht aus M+N Bits besteht und die M Bits zum Aktivieren oder Deaktivieren der Datenvervielfältigungsübertragungsfunktion der M Träger verwendet werden und die N Bits ungültige Bits sind; oder die zweite Nachricht aus M Bits besteht und nicht die N ungültigen Bits umfasst, und die M Bits zum Aktivieren oder Deaktivieren der Datenvervielfältigungsübertragungsfunktion der M Träger verwendet werden.

5. Verfahren nach Anspruch 3 oder 4. wobei
die dritte Nachricht aus M+N Bits besteht und die N Bits zum Aktivieren oder Deaktivieren der Datenvervielfältigungsübertragungsfunktion der N Träger verwendet werden und die M Bits ungültige Bits sind; oder die dritte Nachricht aus N Bits besteht und nicht die M ungültigen Bits umfasst, und die N Bits zum Aktivieren oder Deaktivieren der Datenvervielfältigungsübertragungsfunktion der N Träger verwendet werden.

6. Verfahren nach Anspruch 1, wobei die Endgerätevorrichtung S Träger umfasst;
N Träger nicht die Funktion der Datenvervielfältigungsübertragung haben; und Informationen, die zum Aktivieren oder Deaktivieren der Datenvervielfältigungsübertragungsfunktion von M Trägern verwendet werden, in eine vierte Nachricht gemappt werden, wobei M+N=S und S, M und N positive ganze Zahlen sind.

7. Verfahren nach Anspruch 6, wobei
die vierte Nachricht aus M+N Bits besteht und die M Bits zum Aktivieren oder Deaktivieren der Datenvervielfältigungsübertragungsfunktion der M Träger verwendet werden und die N Bits ungültige Bits sind; oder die vierte Nachricht aus M Bits besteht und die M Bits zum Aktivieren oder Deaktivieren der Datenvervielfältigungsübertragungsfunktion der M Träger verwendet werden und die vierte Nachricht nicht die N ungültigen Bits umfasst.

8. Verfahren nach einem der Ansprüche 2-7, wobei Informationen, die zum Aktivieren oder Deaktivieren der Datenvervielfältigungsübertragungsfunktion von Trägern der Endgerätevorrichtung verwendet werden, in eine Nachricht gemappt werden, in der die Informationen entsprechend einer Folge von Identifikatoren der aktivierten oder deaktivierten Träger enthalten sind.

9. Verfahren nach Anspruch 8, wobei die Angabeinformationen eine sendende Partei der Nachricht angeben, um die Nachricht anzugeben, in der die erste Information enthalten ist.

10. Verfahren nach einem der Ansprüche 2-9, wobei die Informationen, die zum Aktivieren oder Deaktivieren der Datenvervielfältigungsübertragungsfunktion der S Träger verwendet werden, in mindestens eine Nachricht gemappt werden, und jede Nachricht der mindestens einen Nachricht aus Q Bits besteht, und Q eine positive ganze Zahl größer oder gleich S ist; und
die Angabeinformationen eine Anordnungsposition der ersten Information in den Q Bits angeben, um die Nachricht, in der die erste Information enthalten ist und/oder die Bitposition der ersten Information in der Nachricht anzugeben.

11. Verfahren nach einem der Ansprüche 1-10, wobei die Angabeinformationen in einer Funkressourcensteuerungsnachricht, RRC-Nachricht zum Konfigurieren für den mindestens einen Träger übertragen werden.

12. Verfahren nach einem der Ansprüche 1-11, wobei die Angabeinformationen durch einen Masternetzwerkknoten oder einen sekundären Netzwerkknoten der Endgerätevorrichtung gesendet werden.

13. Verfahren zur Steuerung der Datenvervielfältigungsübertragungsfunktion für Dualverbindung, DC, umfassend:
Bestimmen einer Nachricht, in der mindestens eine erste Information enthalten ist, und einer Bitposition der ersten Information in der Nachricht, wobei die mindestens eine erste Information verwendet wird, um eine Datenvervielfältigungsübertragungsfunktion mindestens eines Trägers einer jeweiligen Endgerätevorrichtung zu aktivieren bzw. zu deaktivieren (110), wobei die Nachricht, in der die mindestens eine erste Information enthalten ist, ein Medienzugriffssteuerungs-, MAC-, Steuerelement, CE ist; und
Senden von Angabeinformationen an die Endgerätevorrichtung, wobei die Angabeinformationen die Nachricht angeben, in der die erste Information enthalten ist, und die Bitposition der ersten Information in der Nachricht (120).

14. Endgerätevorrichtung (200), umfassend eine Kommunikationseinheit und eine Verarbeitungseinheit, wobei
die Kommunikationseinheit (210) dazu konfiguriert ist, von einer Netzwerkvorrichtung gesendete Angabeinformationen zu empfangen, wobei die Angabeinformationen angeben: eine Nachricht, in der mindestens eine erste Information enthalten ist, und eine Bitposition der ersten Information in der Nachricht,
wobei die mindestens eine erste Information verwendet wird, um eine Datenduplizierungsübertragungsfunktion mindestens eines Trägers der Endgerätevorrichtung in einer Dualverbindung (DC) zu aktivieren bzw. zu deaktivieren, wobei die Nachricht, in der die mindestens eine erste Information enthalten ist, ein Medienzugriffssteuerungs-, MAC-, Steuerelement, CE ist; und
die Verarbeitungseinheit (220) dazu konfiguriert ist, einen Träger zu bestimmen, dessen Datenvervielfältigungsübertragungsfunktion gemäß den Angabeinformationen und gemäß einer empfangenen Nachricht, die zum Aktivieren oder Deaktivieren der Datenvervielfältigungsübertragungsfunktion des Trägers verwendet wird, aktiviert oder deaktiviert werden muss.

## Revendications

1. Procédé de commande d'une fonction de transmission par duplication de données en Double Connexion, DC, comprenant :
la réception, par un dispositif terminal, d'informations d'indication envoyées par un dispositif de commande, dans lequel les informations d'indication indiquent : un message dans lequel au moins un élément de premières informations est inclus et une position binaire des premières informations dans le message, dans lequel l'au moins un élément de premières informations est utilisé pour activer ou désactiver respectivement une fonction de transmission par duplication de données d'au moins un support du dispositif terminal (130), dans lequel le message dans lequel l'au moins un élément de premières informations est inclus est un Élément de Contrôle, CE, de Contrôle d'Accès au Support, MAC ; et
la détermination, par le dispositif terminal, d'un support dont la fonction de transmission par duplication de données doit être activée ou désactivée selon les informations d'indication et selon un message reçu utilisé pour activer ou désactiver la fonction de transmission par duplication de données du support (140).

2. Procédé selon la revendication 1, dans lequel le dispositif terminal comprend S supports, et les informations utilisées pour activer ou désactiver la fonction de transmission par duplication de données des supports S sont incluses dans un même premier message, et S est un entier positif.

3. Procédé selon la revendication 1, dans lequel le dispositif terminal comprend S supports ;
les informations utilisées pour activer ou désactiver la fonction de transmission par duplication de données de M supports sont incluses dans un deuxième message ; et
les informations utilisées pour activer ou désactiver la fonction de transmission par duplication de données de N supports, à l'exception des M supports, sont incluses dans un troisième message qui n'est pas le deuxième message,
où M+N=S et les nombres M et N sont des entiers positifs.

4. Procédé selon la revendication 3, dans lequel le deuxième message est constitué de M+N bits, et les M bits sont utilisés pour activer ou désactiver la fonction de transmission par duplication de données des M supports, et les N bits sont des bits invalides ; ou
le deuxième message est constitué de M bits et ne comprend pas les N bits invalides, et les M bits sont utilisés pour activer ou désactiver la fonction de transmission par duplication de données des M supports.

5. Procédé selon la revendication 3 ou 4, dans lequel le troisième message est constitué de M+N bits, et les N bits sont utilisés pour activer ou désactiver la fonction de transmission par duplication de données des N supports, et les M bits sont des bits invalides ; ou
le troisième message est constitué de N bits et ne comprend pas les M bits invalides, et les N bits sont utilisés pour activer ou désactiver la fonction de transmission par duplication de données des N supports.

6. Procédé selon la revendication 1, dans lequel le dispositif terminal comprend S supports ;
N supports ne présentent pas la fonction de transmission par duplication de données ; et
les informations utilisées pour activer ou désactiver la fonction de transmission par duplication de données de M supports sont mises en correspondance dans un quatrième message,
dans lequel M+N=S et les nombres S, M et N sont des entiers positifs.

7. Procédé selon la revendication 6, dans lequel
le quatrième message est constitué de M+N bits, et les M bits sont utilisés pour activer ou désactiver la fonction de transmission par duplication de données des M supports, et les N bits sont des bits invalides ; ou
le quatrième message est constitué de M bits, et les M bits sont utilisés pour activer ou désactiver la fonction de transmission par duplication de données des M supports, et le quatrième message ne comprend pas les N bits invalides.

8. Procédé selon l'une quelconque des revendications 2-7, dans lequel les informations utilisées pour activer ou désactiver la fonction de transmission par duplication de données des supports du dispositif terminal sont mises en correspondance dans un message dans lequel les informations sont incluses selon une séquence d'identifiants des supports activés ou désactivés.

9. Procédé selon la revendication 8, dans lequel les informations d'indication indiquent à une partie émettrice du message d'indiquer le message dans lequel les premières informations sont incluses.

10. Procédé selon l'une quelconque des revendications 2-9, dans lequel les informations utilisées pour activer ou désactiver la fonction de transmission par duplication de données des S supports sont mises en correspondance dans au moins un message, et chaque message parmi le ou les messages est constitué de Q bits, et Q est un entier positif supérieur ou égal à S ; et
les informations d'indication indiquent une position d'agencement des premières informations dans les Q bits pour indiquer au moins l'un de ce qui suit : le message dans lequel sont incluses les premières informations, ou la position binaire des premières informations dans le message.

11. Procédé selon l'une quelconque des revendications 1-10, dans lequel les informations d'indication sont transportées dans un message de Contrôle de Ressources Radio, RRC, pour la configuration de l'au moins un support.

12. Procédé selon l'une quelconque des revendications 1-11, dans lequel les informations d'indication sont envoyées par un nœud de réseau maître ou un nœud de réseau secondaire du dispositif terminal.

13. Procédé de commande de la fonction de transmission par duplication de données en Double Connexion, DC, comprenant :
la détermination d'un message dans lequel au moins un élément de premières informations est inclus et d'une position binaire des premières informations dans le message, dans lequel l'au moins un élément de premières informations est utilisé pour activer ou désactiver respectivement une fonction de transmission par duplication de données d'au moins un support d'un dispositif terminal (110), dans lequel le message dans lequel l'au moins un élément de premières informations est inclus est un Élément de Contrôle, CE, de Contrôle d'Accès au Support, MAC ; et
l'envoi d'informations d'indication au dispositif terminal, dans lequel les informations d'indication indiquent le message dans lequel les premières informations sont incluses et la position binaire des premières informations dans le message (120).

14. Dispositif terminal (200), comprenant une unité de communication et une unité de traitement, dans lequel l'unité de communication (210) est configurée pour recevoir des informations d'indication envoyées par un dispositif de réseau, les informations d'indication indiquant : un message dans lequel au moins un élément de premières informations est inclus et une position binaire des premières informations dans le message, dans lequel l'au moins un élément de premières informations est utilisé pour activer ou désactiver respectivement une fonction de transmission par duplication de données d'au moins un support du dispositif terminal en Double Connexion (DC), dans lequel le message dans lequel l'au moins un élément de premières informations est inclus est un Élément de Contrôle, CE, de Contrôle d'Accès au Support, MAC ; et
l'unité de traitement (220) est configurée pour déterminer un support dont la fonction de transmission par duplication de données doit être activée ou désactivée selon les informations d'indication et selon un message reçu utilisé pour activer ou désactiver la fonction de transmission par duplication de données du support.
